# FASCICULE DE BREVET EUROPEEN

(11) **EP 0 540 410 B1**
(45) Date de publication et mention de la délivrance du brevet: **18.10.1995**
(21) Numéro de dépôt: 92402913.5
(22) Date de dépôt: 27.10.1992
(51) Int. Cl.: B25J 9/16, B25J 5/00, B25J 15/04

(54) **Robot deplaçable sur des postes de travail fixes ou mobiles**
Nicht-ortsfester Roboter auf festen oder bewegten Arbeitsplätzen
Robot relocatable on fixed or mobile working posts

(30) Priorité: 29.10.1991 FR 9113327
(43) Date de publication de la demande: 05.05.1993
(73) Titulaire: COMMISSARIAT A L'ENERGIE ATOMIQUE, 75015 Paris (FR)
(72) Inventeur: Detriche, Jean-Marie, F-78590 Noisy le Roi (FR)
(74) Mandataire: Dubois-Chabert, Guy

(56) Documents cités:
- FR-A- 2 550 984
- US-A- 4 664 590
- US-A- 4 887 016

## Description

La présente invention concerne un robot équipant un poste de travail et pouvant être déplacé sur d'autres postes de travail. Ce robot trouve de nombreuses applications dans le domaine de la robotique industrielle ou de la robotique de service et, plus particulièrement, dans le domaine de la robotique d'aide aux handicapés.

En effet, il existe aujourd'hui, dans le domaine de la robotique d'aide aux handicapés, des systèmes robotisés assurant une assistance quasi-permanente aux handicapés-moteurs. Ces systèmes assurent à ces personnes une aide dans des tâches très variées, telles que celles à effectuer dans une cuisine ou dans un bureau.

Ces systèmes robotisés sont connus sous deux formes différentes : soit le robot équipe un poste de travail fixe, soit le robot est embarqué sur le fauteuil électrique de la personne handicapée concernée constituant ainsi un poste de travail mobile.

Si le robot à poste de travail fixe a une autonomie énergétique illimitée, c'est-à-dire qu'il est relié directement au secteur, et s'il permet une grande efficacité dans la réalisation des tâches, il présente néanmoins l'inconvénient de ne pouvoir être utilisé que dans un environnement restreint et donc pour un nombre de tâches restreint. Pour assurer à la personne handicapée une certaine autonomie dans sa vie quotidienne et donc un nombre important de tâches exécutées par robot, il faudrait multiplier le nombre des robots, ce qui représente un coût très élevé.

Au contraire, les robots embarqués sur les fauteuils permettent une grande autonomie pour la personne handicapée, puisque le robot l'accompagne en permanence. Cependant, ces robots embarqués présentent plusieurs inconvénients, dont notamment celui d'une faible autonomie énergétique, car le robot est alimenté par des batteries embarquées sur le fauteuil électrique. De plus, il est difficile, d'embarquer un robot fonctionnant selon un mode automatique car le système informatique embarquable n'assure pas une puissance suffisante pour mémoriser un grand nombre de programmes d'exécution des tâches à effectuer par le robot.

En outre, lorsqu'il travaille par rapport à un environnement fixe, le robot embarqué doit retrouver ses références par rapport à cet environnement pour réaliser des tâches automatiques. Cette mise en référence n'est pas simple car le fauteuil présente un positionnement aléatoire par rapport à l'environnement.

La présente invention a justement pour objet un système robotique (appelé plus simplement robot pouvant être déplacé, au moins en partie, d'un poste de travail fixe sur un fauteuil et inversement.

Les termes "fauteuil" et "poste mobile" devront être lus, dans toute la description, d'une façon indifférente. D'autre part, on considèrera que la notion de "poste de travail" comprend aussi bien les postes fixes que les postes mobiles.

D'une façon plus précise, l'invention a pour objet un système robotique apte à effectuer des tâches et comportant un moyen manipulateur équipant au choix un poste de travail mobile (1) ou un poste de travail fixe, et des moyens pour être commandé à partir d'une interface utilisateur/système robotique située sur le poste de travail mobile, reliée à des moyens d'émission/réception situés sur ce poste de travail mobile et échangeant des informations avec des moyens émetteur/récepteur situés sur le poste de travail fixe, chacun des postes de travail comportant des moyens d'alimentation en énergie et le système robotique comprenant des moyens de déplacement lui permettant de déplacer le moyen manipulateur, d'un premier poste de travail sur au moins un second poste de travail, l'un de ces postes au moins étant mobile.

Selon un premier mode de réalisation, le poste de travail fixe comporte un moyen de mémorisation des tâches à effectuer par le robot (ou système robotique) et des moyens émetteur/récepteur pour échanger des informations avec l'interface utilisateur/robot.

Selon un second mode de réalisation, chaque poste de travail fixe est connecté, par l'intermédiaire d'un réseau local de communication, à un unique moyen de mémorisation des tâches à effectuer par le robot, chacun desdits postes comportant des moyens émetteur/récepteur pour échanger des informations avec l'interface utilisateur/robot.

Selon un troisième mode de réalisation, le robot comprend un moyen de mémorisation des tâches à effectuer ainsi que des moyens émetteur/récepteur (E/R) pour échanger des informations avec l'interface.

Selon une première variante de l'invention, le système robotique comporte un moyen manipulateur apte à manipuler des objets et un moyen porteur sur lequel est fixé le moyen manipulateur apte à être déplacé par ledit moyen porteur dans un espace de travail prédéfini, le moyen porteur pouvant être déplacé du premier poste de travail sur le second poste de travail. Les moyens de déplacement comportent alors un coupleur assurant des liaisons mécaniques et électriques entre le système robotique et l'un des postes de travail.

Selon cette première variante, chaque poste de travail comporte une embase apte à être unie au coupleur. Ce coupleur comporte des moyens de verrouillage assurant à la fois le verrouillage et un contact électrique dudit coupleur sur l'embase du poste de travail. Il comporte en outre des moyens pour guider l'embase d'un poste de travail vers l'embase d'un autre poste de travail. Ces moyens pour guider les embases comprennent une pièce cylindrique dont les parties extrêmes sont biaisées vers l'intérieur.

Avantageusement, les embases des postes de travail comportent des moyens d'alignement de l'une sur l'autre.

Selon un mode de réalisation du système, les moyens de verrouillage comportent un verrou à balance assurant simultanément le déverrouillage du coupleur hors de l'embase d'un poste de travail et le verrouillage du coupleur sur l'embase d'un autre poste de travail.

Selon une seconde variante de l'invention, le système robotique comporte un moyen manipulateur apte à manipuler des objets.Il comporte en outre des moyens porteurs aptes à déplacer le moyen manipulateur dans un espace de travail prédéfini. Chacun des moyens porteurs est fixé sur un poste de travail, le moyen manipulateur étant déplacé d'un premier moyen porteur sur un second moyen porteur. Les moyens de déplacement comportent alors un support d'accostage assurant des liaisons mécaniques et électriques entre le moyen manipulateur et l'un des moyens porteurs. En outre, ce support d'accostage comporte des moyens de verrouillage assurant à la fois un verrouillage et un contact électrique dudit support d'accostage sur le moyen porteur. De plus, il comporte au moins un moteur et un moyen de transmission pour transmettre au moyen manipulateur des mouvements permettant la réalisation des tâches commandées.

D'autres caractéristiques et avantages de l'invention apparaitront dans la description qui va suivre, donnée à titre illustratif mais non limitatif, en référence aux dessins dans lesquels :
- la figure 1A représente une architecture d'un système comportant, selon la première variante de l'invention, un robot positionné sur le fauteuil électrique et pouvant être déplacé sur un poste de travail fixe ;
- la figure 1B représente cette même architecture du système lorsque le robot est positionné sur le poste de travail fixe ;
- la figure 2A représente de façon très schématique l'erreur qui peut se produire dans le plan vertical lorsque l'on rapproche, dans la première variante, le fauteuil du poste de travail fixe pour déplacer le robot de l'un sur l'autre ;
- la figure 2B représente, également de façon très schématique, l'erreur qui peut se produire dans le plan horizontal lors du rapprochement du fauteuil et du poste de travail fixe ;
- les figures 3A, 3B, 3C, 3D et 3E représentent schématiquement les différentes étapes suivies par le robot lorsqu'il est déplacé du fauteuil électrique sur le poste de travail fixe ;
- la figure 4 représente, schématiquement, le robot embarqué sur le fauteuil conformément à la seconde variante de réalisation de l'invention, selon laquelle le moyen manipulateur est déplacé d'un moyen porteur sur un autre moyen porteur.

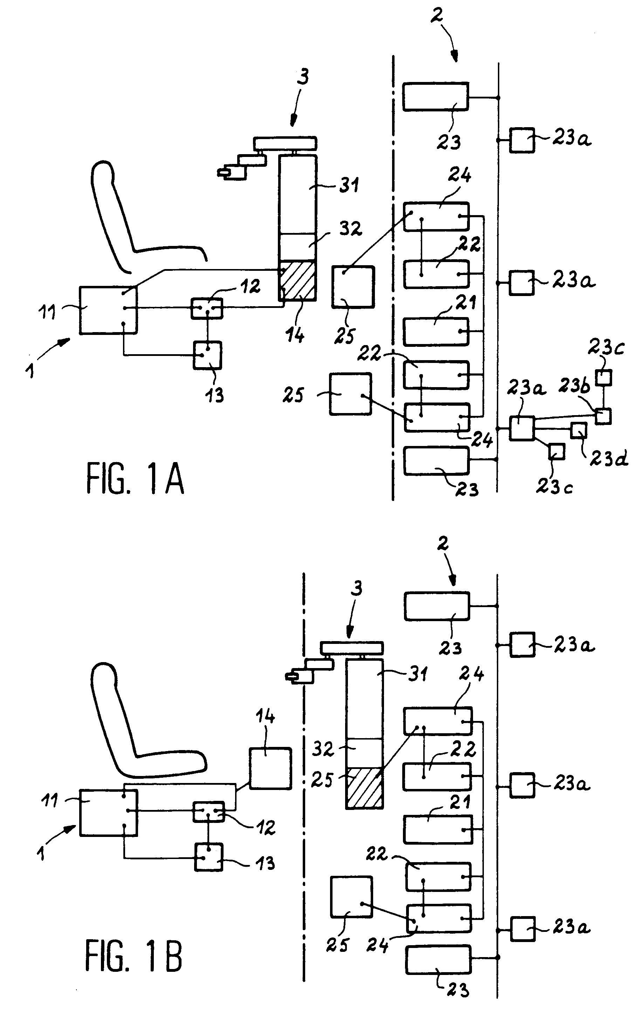

Les figures 1 à 3 représentent le robot embarqué sur le fauteuil selon la première variante de l'invention. Selon cette variante, le robot comporte un moyen porteur et un moyen manipulateur monté de façon permanente sur ledit moyen porteur. La totalité du robot est donc déplacée d'un poste de travail fixe sur-un poste de travail mobile.

La figure 1A représente une architecture d'un système formé du fauteuil électrique 1, du poste de travail fixe 2 et du robot 3. Sur la partie gauche de la figure, on voit le fauteuil électrique 1 équipé du système embarqué ainsi que tous les éléments qui lui sont liés, à savoir une source 11 d'énergie propre, telle que des batteries, une interface utilisateur/robot et un émetteur/récepteur. L'interface 12 utilisateur/robot permet à la personne handicapée de dialoguer avec le robot 3, c'est-à-dire de commander les manoeuvres que le robot 3 doit effectuer. La liaison entre l'interface 12 utilisateur/robot et la source 11 d'énergie est une liaison de puissance, c'est-à-dire physiquement, un câble électrique. Il en est de même pour la liaison physique entre l'émetteur/récepteur 13 et la source 11 d'énergie, cette liaison étant également effectuée au moyen d'un câble électrique. Sur la figure, on a représenté également les moyens 31 de commande du robot et un coupleur 32 liés au robot. Les moyens de commande 31 sont intégrés au robot. Le coupleur 32 est lui-même relié à la source 11 d'énergie du fauteuil et à l'interface 12 utilisateur/robot par l'intermédiaire d'une embase 14 fixée sur le fauteuil. Selon un mode de réalisation de l'invention, cette connexion du coupleur 32 sur la source 11 d'énergie et l'interface 12 utilisateur/robot, tous deux liés au fauteuil 1, peut se faire simplement par une broche électrique non représentée sur la figure. La connexion se fait par l'intermédiaire de l'embase.

Le poste de travail fixe 2 et les éléments qui lui sont liés sont représentés sur la partie droite de la figure. Ce poste de travail fixe 2 comprend également une source 21 d'énergie, cette source d'énergie étant le secteur. Il comprend également un émetteur/récepteur 22, ainsi que des récepteurs locaux 23. L'émetteur/récepteur 22 permet la communication entre l'interface 13 et le robot et donc, la commande du robot 3 lorsque celui-ci est sur le poste de travail fixe 2. Les récepteurs locaux 23 permettent de contrôler l'environnement : en effet, l'émetteur/récepteur 13 du fauteuil 1 est apte à agir sur l'environnement par l'intermédiaire de systèmes de contrôle de l'environnement. Un système de contrôle de l'environnement comporte un récepteur local 23, un contrôleur 23a et des équipements 23b, 23c, 23d, 23e (par exemple, un moteur d'ouverture de porte), le contrôleur 23a étant apte à commander les équipements 23b à 23e en fonction des informations reçues par le récepteur local 23. Les liaisons entre l'émetteur/récepteur du fauteuil 1 et l'émetteur/récepteur 22 du poste de travail fixe 2 sont réalisées par une liaison sans fil telle qu'une liaison infrarouge ou des liaisons hertziennes.

Selon le mode de réalisation préféré de l'invention, le poste de travail fixe 2 peut également comporter une mémoire 24 reliée à l'embase 25 dudit poste et dans laquelle sont mémorisés les programmes correspondant aux différentes tâches que le robot 3 doit effectuer de façon automatique. Lorsque le robot 3 est embarqué sur le fauteuil électrique 1, comme cela est représenté sur la figure 1A, il n'y a aucun lien physique entre le robot 3 et le poste de travail fixe 2. Un lien existe entre l'émetteur/récepteur 13 du fauteuil 1 et les récepteurs locaux 23 du système de contrôle de l'environnement, ce lien étant une liaison sans fil.

Avantageusement, le coupleur 32 du robot est un coupleur à la fois mécanique et électrique, c'est-à-dire qu'il établit à la fois les liaisons mécaniques entre le robot 3 et le fauteuil 1, et les liaisons électriques entre notamment la source 11 d'énergie et les moyens de commande 31 du robot.

La figure 1B représente également l'architecture de ce même système dans lequel le robot 3, cette fois, est positionné sur le poste de travail fixe 2. Sur cette figure, les liaisons entre les éléments propres au fauteuil 1 restent identiques à ceux représentés sur la figure 1A. Par contre, les liaisons par câbles entre la source 11 d'énergie et le coupleur 32, et entre l'interface 12 robot/utilisateur et ledit coupleur 32 n'existent plus puisque le robot 3 est fixé sur le poste de travail fixe 2. Le coupleur 32 du robot 3 est alors relié au poste de travail fixe 2 par l'intermédiaire de l'embase 25 fixée audit poste de travail, ce coupleur étant relié par câbles électriques à la mémoire 24, et donc relié à la source 21 d'énergie du poste de travail fixe et à l'émetteur/récepteur 22 dudit poste de travail, ainsi qu'aux moyens de commande 31 du robot. Le poste de travail fixe 2, supportant le robot 3, est en liaison avec le fauteuil 1 au moyen des émetteurs/récepteurs 22 et 13.

Sur cette figure 1B, on a représenté le mode de réalisation de l'invention dans lequel chaque poste de travail fixe 2 comporte une mémoire 24, ce mode de réalisation ayant déjà été décrit lors de la description de la figure 1A.

Cependant, selon un autre mode de réalisation de l'invention, non représenté sur les figures, chaque poste de travail fixe ne comporte pas sa propre mémoire ; une mémoire globale, reliée à chacun des postes fixes, comprend tous les programmes correspondant à toutes les tâches exécutables par le robot sur tous les postes de travail. Chaque poste fixe recherche dans la mémoire globale, le programme qu'il doit éxecuter.

Selon un autre mode de réalisation, non représenté sur les figures, le robot comporte sa propre mémoire. Selon une variante de ce mode de réalisation, il peut comporter également un émetteur/récepteur lui permettant d'être commandé à partir du fauteuil. Selon une autre variante de ce mode de réalisation, en plus de la mémoire intégrée au robot, une première mémoire additionnelle est embarquée sur le fauteuil et une seconde mémoire additionnelle est intégrée à chaque poste de travail fixe. Chacune de ces trois mémoires comporte les programmes comportant, respectivement, les tâches propres au robot, et les tâches particulières exécutables par le robot, respectivement depuis le fauteuil et depuis le poste fixe. De plus, il est possible de relier, par un réseau local, les secondes mémoires additionnelles de chaque poste de travail fixe, ainsi que les embases fixes desdits postes de travail.

De plus, sur ces figures 1A et 1B, on a représenté le mode de réalisation de l'invention dans lequel les moyens de commande 31 sont intégrés au robot.

Selon un mode préféré de réalisation de l'invention, ces moyens de commande 31 comportent des premiers moyens de commande embarqués sur le fauteuil et des seconds moyens de commande intégrés au poste de travail fixe. Les premiers moyens de commande sont dans ce cas, connectés à l'interface 12 et à l'embase 14, la liaison directe entre l'interface 12 et l'embase 14 étant alors supprimée. Les seconds moyens de commande sont alors connectés à l'émetteur/récepteur 22 et à l'embase fixe 25.

Selon une variante de ce dernier mode de réalisation, les seconds moyens de commande de chaque poste fixe sont reliés par un réseau local.

Il est bien entendu, de plus, que les deux émetteurs/récepteurs 13 et 22 liés d'une part au fauteuil et d'autre part au poste de travail fixe, c'est-à-dire les moyens d'émission/réception décrits précédemment pourraient, éventuellement, exister sous une forme technologique différente. Les moyens 13 pourraient, par exemple, être seulement un émetteur et les moyens 22 seulement un récepteur.

D'autre part, pour pouvoir être assemblé à un autre poste de travail, chacun des postes de travail (fauteuil ou poste de travail fixe) comporte une embase (14 ou 25). Le coupleur 32, dans son rôle mécanique, permet d'assembler l'embase du fauteuil avec l'embase du poste de travail fixe sur lequel on vient déposer le robot 3, ou sur lequel on vient prendre le robot 3 pour le déposer sur le fauteuil 1.

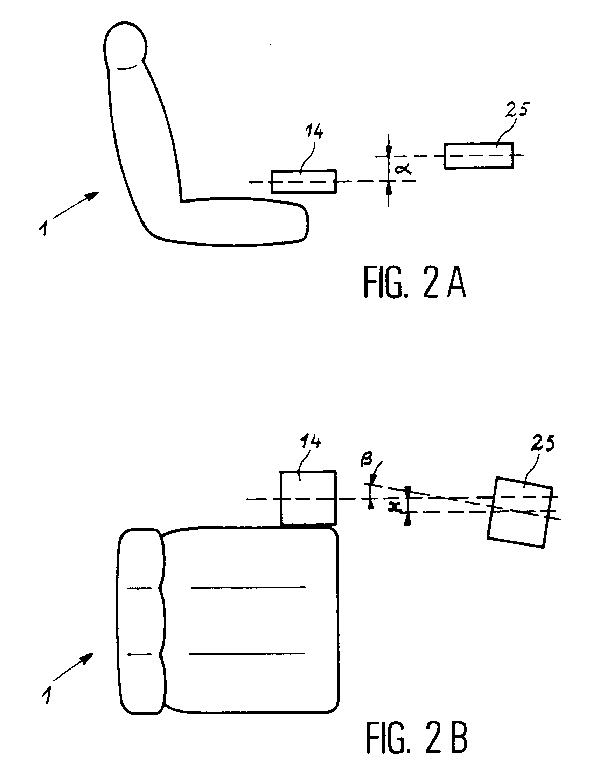

La figure 2A représente, vu de profil, un schéma sur lequel on peut voir l'erreur éventuellement commise dans le plan vertical lorsque l'on rapproche le fauteuil 1 du poste de travail fixe 2. En effet, l'embase 14 du fauteuil et l'embase 25 du poste de travail fixe peuvent être décalées verticalement d'une distance α, suite à des imperfections de déplacement du fauteuil.

La figure 2B représente, vu de dessus, un schéma dans lequel on peut voir un exemple d'erreur commise dans le plan horizontal, c'est-à-dire une erreur en orientation β de l'embase fixe 25 par rapport à l'embase 14 du fauteuil et un décalage latéral x.

Le coupleur 32 a une forme particulière permettant l'accouplement de l'embase 14 du fauteuil avec l'embase 25 du poste de travail malgré les erreurs dues aux imperfections des déplacements du fauteuil 1. Ainsi, le coupleur 32 permet de corriger les erreurs de position et orientation dans les plans vertical et horizontal.

Nous supposerons dans cette description que le guidage du fauteuil 1 se fait manuellement. Il pourrait néanmoins se faire de façon automatique, par exemple, à l'aide d'un marquage au sol ; dans ce dernier cas, le fauteuil 1 comprend une technologie particulière adaptée. Dans le mode manuel, la personne handicapée positionne son fauteuil 1 par rapport à l'embase 25 du poste de travail fixe. Le coupleur 32 permet alors un accouplement de l'embase 14 du fauteuil avec l'embase 25 du poste de travail d'une façon précise.

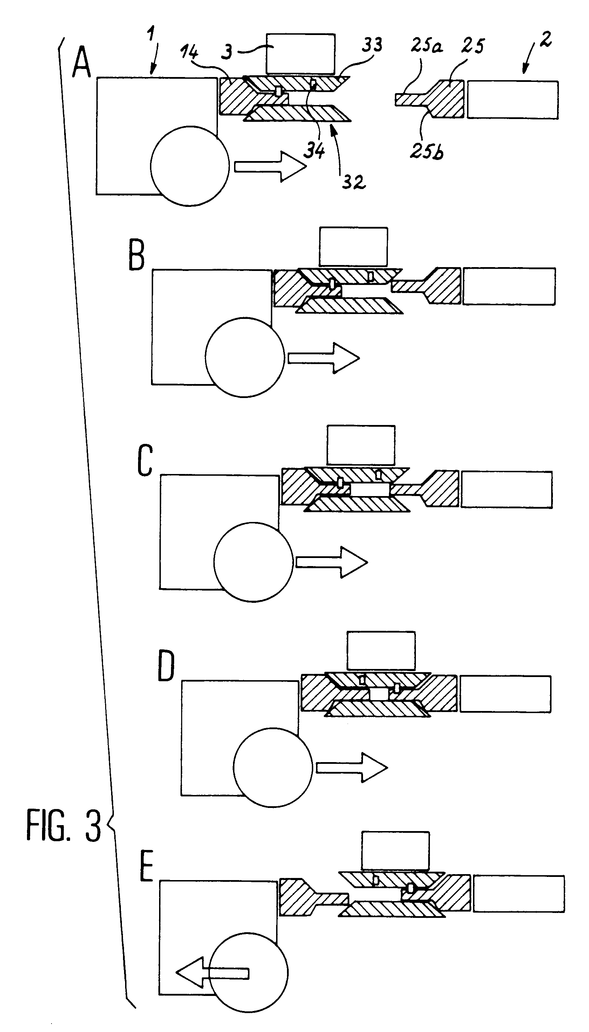

A cette fin, le coupleur 32, représenté sur les figures 3A, 3B, 3C, 3D et 3E, est constitué d'une pièce cylindrique 33 dont les parties extrêmes 33a sont biaisées vers l'intérieur de la pièce cylindrique 33. Ceci donne à la pièce cylindrique 33 une entrèe en forme de V dans laquelle les embases 14 et 25 du fauteuil et du poste de travail fixe viennent s'enficher de part et d'autre.

En effet, les embases 14 et 25 sont elles-mêmes de formes particulières permettant un emboîtement aisé desdites embases dans le coupleur 32. En effet, chaque embase comprend, à son extrémité libre, c'est-à-dire l'extrémité non fixée, une broche 25a en forme de tige venant s'emboîter dans la partie creuse de la pièce cylindrique 33 du coupleur 32. De plus, une partie 25b de l'embase est chanfreinée de façon à s'emboîter dans la partie en V 33a de ladite pièce cylindrique 33 du coupleur 32.

L'embase 14 comprend, de plus, des moyens de suspension, non représentés, permettant un jeu vertical entre l'embase considérée 14 et son support, à savoir le fauteuil 1. En effet, pour réparer l'erreur qui peut être commise dans le plan vertical, des moyens de suspension de type ressort sont situés entre l'embase et le fauteuil. Ces moyens de suspension permettent à l'ensemble embase/coupleur de se décaler verticalement d'une faible distance par rapport au poste de travail, vers le haut ou vers le bas selon les besoins.

Dans le mode de réalisation représenté sur les figures 3, seule l'embase 14 du fauteuil comprend ces moyens de suspension, cependant, il n'est pas à exclure que chaque embase possède ses propres moyens de suspension.

Le coupleur 32 comprend également des moyens de verrouillage 34. Ces moyens de verrouillage sont constitués, par exemple, d'un vérou à balance. Ce vérou permet simultanément de verrouiller le coupleur 32 sur l'embase 14 et de déverrouiller ledit coupleur 32 de l'autre embase 25, ou inversement. Lorsque le coupleur 32 est verrouillé sur l'une des embases 14 ou 25, le contact électrique s'établit entre le robot et le poste de travail fixe ou mobile correspondant à l'embase sur lequel il est verrouillé.

La série de figures 3A, 3B, 3C, 3D et 3E montrent les différentes étapes suivies par le robot lorsqu'il est déplacé d'un poste fixe vers un poste de travail mobile ou, inversement, d'un poste de travail mobile vers un poste de travail fixe.

La figure 3A montre le robot 3 lorsqu'il est embarqué sur le fauteuil 1.

La figure 3B montre le rapprochement du fauteuil 1 vers le poste de travail fixe 2 avec l'approche de la broche 25a de l'embase 25 du poste de travail fixe sur le coupleur 32. On remarque, sur le dessin, que l'embase 25 du poste de travail fixe n'est pas alignée à la verticale sur l'embase 14 du poste de travail mobile, à savoir le fauteuil. Le contact du coupleur 32, positionné actuellement sur le fauteuil, avec l'embase 25 du poste de travail fixe va permettre à l'embase 14 du fauteuil de s'élever grâce aux moyens de suspension, de façon à ce que l'ensemble embase du fauteuil/coupleur soit aligné verticalement avec l'embase du poste de travail fixe. Tant que la broche 25a de l'embase 25 du poste de travail fixe est en contact avec la partie biaisée 33a de la pièce cylindrique 33 du coupleur, l'ensemble embase du fauteuil/coupleur s'élève jusqu'à ce que la broche 25a de l'embase 25 du poste de travail fixe s'emboîte dans la partie creuse de la pièce cylindrique 33 du coupleur.

Sur la figure 3C, on voit la broche 25a de l'embase du poste de travail fixe emboîtée dans le creux de la pièce cylindrique du coupleur. Le fauteuil continue donc à avancer jusqu'à ce que la partie biaisée 33a de la pièce cylindrique 33 entre en contact avec les parties chanfreinées 25b de l'embase 25.

Sur la figure 3D, l'embase 25 du poste de travail fixe est totalement emboîtée dans le coupleur 32. Le vérou à balance 34 s'inverse, s'enfonçant dans l'embase 25 du poste de travail fixe en libérant l'embase 14 du fauteuil.

Sur la figure 3E, le vérou à balance 34 ayant fixé le robot 3 sur le poste de travail fixe 2, le contact électrique entre les moyens de commande 31 et ledit poste de travail sont établis grâce également au coupleur 32. On voit, de plus, sur cette même figure, que l'embase du fauteuil ayant été déverrouillée, le fauteuil peut alors être reculé.

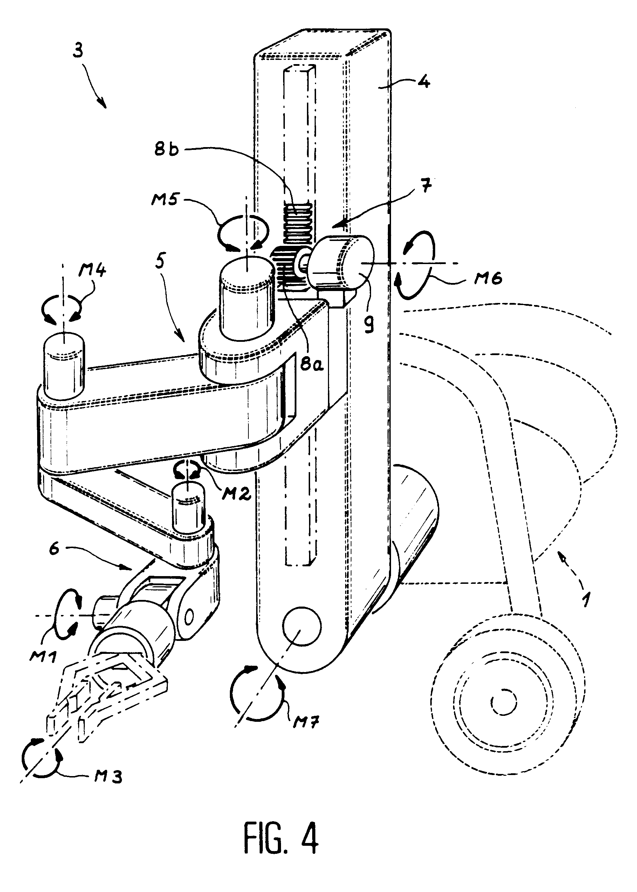

Sur la figure 4, on a représenté le robot 3 embarqué sur le fauteuil 1 selon la seconde variante de l'invention. Selon cette variante, le robot 3 comporte un moyen manipulateur 5 monté de façon amovible sur le moyen porteur 4 dudit robot.

L'architecture générale du système formé du fauteuil électrique, du robot et des postes de travail fixes décrite dans les figures 1A et 1B est sensiblement identique pour cette seconde variante, seuls les moyens de déplacement du robot d'un poste de travail sur un autre diffèrent de la première variante. Aussi, on ne décrira pas, à nouveau, cette architecture avec notamment les moyens de commande du robot, l'interface utilisateur/robot, les connexions électriques, les communications par émetteur/récepteur, les liaisons en rèseaux locaux, etc.

En effet, de nombreux types de robots comportent des moyens manipulateurs sensiblement identiques les uns aux autres. Aussi, pour certaines applications, il est possible de fixer, sur chaque poste de travail fixe ou mobile, un moyen porteur 4 sur l'un desquels est monté le moyen manipulateur 5 en fonction des tâches à effectuer. Ce moyen manipulateur 5 comporte une articulation 6 de type "poignet", c'est-à-dire comportant trois degrés de motricités M1, M2, M3 ; il comporte en plus les deux degrés de motricités en rotation M4 et M5. Un tel moyen manipulateur 5 permet donc la manipulation et l'orientation d'objets divers dans l'espace.

Le nombre de degrés de mobilité du moyen porteur 4 dépend du type de moyen manipulateur utilisé et des tâches à accomplir.

Le moyen porteur 4 monté sur le fauteuil 1 peut, par exemple, comporter une mobilité M6 verticale permettant un déplacement vertical du moyen manipulateur 5 et une mobilité en rotation M7 permettant un déplacement du moyen manipulateur 5 dans un plan horizontal. Un tel moyen porteur permet, notamment, au robot 3 de "se baisser", pour prendre un objet tombé à terre.

Chaque moyen porteur 4 est donc monté de façon permanente sur un poste de travail fixe ou mobile. Ainsi, seul le moyen manipulateur 5 est déplacé d'un moyen porteur positionné sur un poste de travail fixe vers le moyen porteur positionné sur le fauteuil, ou inversement.

Le moyen manipulateur 5 est monté de façon amovible sur le moyen porteur 4 à l'aide d'un support d'accostage 7. En effet, le moyen manipulateur 5 comporte ce support d'accostage 7 qui comprend lui-même des moyens de verrouillage, non représentés sur la figure 4 car sensiblement identiques aux moyens de verrouillage 34 décrits dans la première variante de l'invention. Ces moyens de verrouillage assurent, en effet, à la fois un verrouillage et un contact électrique du support d'accostage 7 sur le moyen porteur 4.

Ce support d'accostage 7 comporte en outre des moyens de transmission de mouvements comprenant une roue dentée 8a apte à s'emboîter dans la crémaillère 8b du moyen porteur 4. Il comporte en outre un moteur 9 d'entraînement assurant l'entraînement de la roue dentée 8a le long de la crémaillère 8b.

Le moyen manipulateur 5 peut ainsi effectuer les mouvements permettant de réaliser les tâches commandées par l'utilisateur à partir de l'interface décrite dans les figures précédentes.

Selon un autre mode de réalisation du support d'accostage 7, ce dernier peut comporter plusieurs moteurs d'entraînement.

Selon également un autre mode de réalisation dudit support d'accostage 7, les moyens de transmission peuvent consister en une pluralité de pignons aptes à s'engrener sur des pignons du moyen porteur.

Toute la description précédente est basée sur l'accouplement d'un poste de travail mobile, à savoir un fauteuil électrique, et d'un poste de travail fixe, sachant toutefois qu'il est possible d'accoupler un poste de travail mobile avec une multitude de postes de travail fixes, le fauteuil se déplaçant de l'un à l'autre pour chercher et reposer, selon la première variante, le robot ou, selon la seconde variante, le moyen manipulateur.

Selon un mode de réalisation préféré de l'invention, il est possible d'organiser ensemble différents postes de travail fixes ensemble selon un réseau local. Les informations à transmettre d'un poste de travail vers un autre poste de travail sont alors transmises sous forme de signaux par le réseau local.

Selon un mode de réalisation simplifié de l'invention, l'émetteur/récepteur 13 peut être un simple émetteur. Dans ce cas, les moyens 22 sont uniquement récepteurs. La liaison entre le fauteuil et les récepteurs locaux sont alors monodirectionnels.

La présente description montre l'exemple d'un fauteuil de handicapé. L'embase mobile, telle qu'elle a été décrite, peut bien entendu être adaptée sur d'autres types de véhicules autoguidés ou télécommandés.

## Revendications

1. Système robotique (3) apte à effectuer des tâches et comportant un moyen manipulateur (5) équipant au choix un poste de travail mobile (1) ou un poste de travail fixe (2), et des moyens pour être commandé à partir d'une interface (12) utilisateur/système robotique située sur le poste de travail mobile, reliée à des moyens d'émission/réception (13) situés sur ce poste de travail mobile et échangeant des informations avec des moyens émetteur/récepteur (22) situés sur le poste de travail fixe, chacun des postes de travail comportant des moyens d'alimentation en énergie et le système robotique (3) comprenant des moyens de déplacement (31, 32) lui permettant de déplacer le moyen manipulateur, d'un premier poste de travail sur au moins un second poste de travail, l'un de ces postes au moins étant mobile.

2. Système robotique selon la revendication 1, caractérisé en ce que le poste de travail fixe comporte un moyen de commande et de mémorisation des tâches à effectuer par le système robotique.

3. Système robotique selon la revendication 1, caractérisé en ce que chaque poste de travail fixe est connecté, par l'intermédiaire d'un réseau local de communication, à un unique moyen de commande et de mémorisation des tâches à effectuer par le robot, chacun desdits postes comportant des moyens émetteur/récepteur (E/R) pour échanger des informations avec l'interface utilisateur/système robotique.

4. Système robotique selon la revendication 1, caractérisé en ce qu'il comprend un moyen de commande et de mémorisation des tâches à effectuer.

5. Système robotique selon la revendication 4, caractérisé en ce qu'il comporte en outre des moyens émetteur/récepteur (E/R) pour échanger des informations avec l'interface utilisateur/système robotique.

6. Système robotique selon l'une quelconque des revendications 1 à 5, caractérisé en ce qu'il comporte des moyens porteurs (4) fixés chacun sur un poste de travail et s'intercalant entre le moyen manipulateur et les moyens de déplacement, ces moyens porteurs étant aptes à déplacer le moyen manipulateur sur un autre moyen porteur dans un espace de travail prédéfini.

7. Système robotique selon la revendication 6, caractérisé en ce que les moyens de déplacement comportent un support d'accostage (7) assurant des liaisons mécaniques et électriques entre le moyen manipulateur et l'un des moyens porteurs.

8. Système robotique selon la revendication 7, caractérisé en ce que le support d'accostage comporte des moyens de verrouillage assurant à la fois un verrouillage et un contact électrique dudit support d'accostage sur le moyen porteur.

9. Système robotique selon la revendication 7 ou 8, caractérisé en ce que le support d'accostage comporte au moins un moteur (9) et un moyen de transmission (8a, 8b) pour transmettre au moyen manipulateur des mouvements permettant la réalisation des tâches commandées.

10. Système robotique selon l'une quelconque des revendications 1 à 5, caractérisé en ce qu'il comporte un moyen manipulateur apte à manipuler des objets et un moyen porteur sur lequel est fixé le moyen manipulateur apte à être déplacé par le moyen porteur dans un espace de travail prédéfini, le moyen porteur pouvant être déplacé du premier poste de travail sur le second poste de travail.

11. Système robotique selon la revendication 10, caractérisé en ce que les moyens de déplacement comportent un coupleur (32) assurant des liaisons mécaniques et électriques entre le système robotique et l'un des postes de travail.

12. Système robotique selon la revendication 10 ou 11, caractérisé en ce que chaque poste de travail comporte une embase (14 ou 25) apte à être unie au coupleur.

13. Système robotique selon la revendication 12, caractérisé en ce que le coupleur comporte des moyens de verrouillage (34) assurant à la fois le verrouillage et un contact électrique dudit coupleur sur l'embase du poste de travail.

14. Système robotique selon la revendication 12 ou 13, caractérisé en ce que le coupleur comporte en outre des moyens pour guider l'embase d'un poste de travail vers l'embase d'un autre poste de travail.

15. Système robotique selon l'une quelconque des revendications 12 à 14, caractérisé en ce que les embases des postes de travail comportent des moyens d'alignement de l'une sur l'autre.

16. Système robotique selon l'une quelconque des revendications 14 et 15, caractérisé en ce que les moyens pour guider les embases comprennent une pièce cylindrique (33) dont les parties extrêmes sont biaisées vers l'intérieur.

17. Système robotique selon l'une quelconque des revendications 13 à 16, caractérisé en ce que les moyens de verrouillage comportent un verrou à balance assurant simultanément le déverrouillage du coupleur hors de l'embase d'un poste de travail et le verrouillage du coupleur sur l'embase d'un autre poste de travail.

## Claims

1. Robotic system (3) able to perform tasks and incorporating a handling means (5) equipping, as desired, a mobile working station (1) or a fixed working station (2), and means to be controlled from a user/robotic system interface (12) located on the mobile working station, connected to transmission/reception means (13) located on said mobile working station and exchanging informations with the transmitting/receiving means (22) located on the fixed working station, each of the working stations having power supply means and the robotic system (3) comprising displacement means (31, 32) enabling it to displace the handling means from a first working station over at least one second working station, at least one of the stations being mobile.

2. Robotic system according to claim 1, characterized in that the fixed working station incorporates a means for the control and storage of the task to be performed by the robotic system

3. Robotic system according to claim 1, characterized in that each fixed working station is connected, by means of a local communications network, to a single means for the control and storage of the tasks to be performed by the robot, each of said stations having transmitting/receiving (T/R) means for exchanging informations with the user/robotic system interface.

4. Robotic system according to claim 1, characterized in that it comprises a means for controlling and storing the tasks to be performed.

5. Robotic system according to claim 4, characterized in that it also incorporates transmitting/receiving (T/R) means for exchanging informations with the user/robotic system interface.

6. Robotic system according to any one of the claims 1 to 5, characterized in that it incorporates carrying means (5), each fixed to a working station and intercalated between the handling means and the displacement means, said carrying means being able to displace the handling means on another carrier means into a predefined working space.

7. Robotic system according to claim 6, characterized in that the displacement means comprise a docking support (7) ensuring mechanical and electric linkages between the handling device and one of the carrier devices.

8. Robotic system according to claim 7, characterized in that the docking support comprises locking means ensuring both locking and an electric contact of said docking support on the carrier device.

9. Robotic system according to claim 7 or 8, characterized in that the docking support comprises at least one motor (9) and one transmission device (8a, 8b) for transmitting to the handling device movements allowing for execution of the ordered tasks.

10. Robotic system according to any one of the claims 1 to 5, characterized in that it comprises one handling device able to handle objects and one carrier device secured to the handling device able to be moved by the carrier device within a predefined working space, the carrier device able to be moved from the first working station onto the second working station.

11. Robotic system according to claim 10, characterized in that the displacement means comprise a coupler (32) ensuring mechanical and electric links between the robotic system and one of the working stations.

12. Robotic system according to claim 10 or 11, characterized in that each working station comprises a seating (14 or 25) able to be connected to the coupler.

13. Robotic system according to claim 12, characterized in that the coupler comprises locking means (34) ensuring the locking and an electric contact of said coupler onto the seating of the working station.

14. Robotic system according to claim 12 or 13, characterized in that the coupler further comprises means to guide the seating of one working station towards the seating of another working station.

15. Robotic system according to any one of the claims 12 to 14, characterized in that the seatings of the working stations comprise means for being aligned with one another.

16. Robotic system according to either of the claims 14 and 15, characterized in that the means to guide the seatings include one cylindrical piece whose extreme portions are slanted inwardly.

17. Robotic system according to any one of the claims 13 to 16, characterized in that the locking means comprise a balance bolt simultaneously ensuring the unlocking of the coupler outside the seating of one working station and the locking of the coupler onto the seating of another working station.

## Patentansprüche

1. Robotersystem (3) zum Ausfuhren von Arbeiten, umfassend eine Handhabungseinrichtung (5), wahlweise einen beweglichen Arbeitsplatz (1) oder einen ortsfesten Arbeitsplatz (2) ausstattend, und Einrichtungen, um von einem auf dem beweglichen Arbeitsplatz befindlichen Benutzer-/Robotersystem-Interface (12) aus gesteuert zu werden, verbunden mit Sende/Empfangseinrichtungen (13), die sich an diesem beweglichen Arbeitsplatz befinden und Informationen austauschen mit Sende/Empfangseinrichtungen (22), die sich an dem festen Arbeitsplatz befinden, wobei jeder der Arbeitsplätze Energieversorgungseinrichtungen umfaßt und das Robotersystem (3) Verschiebungseinrichtungen (31, 32) umfaßt, die im ermöglichen, die Handhabungseinrichtung von einem ersten Arbeitsplatz zu wenigstens einem zweiten Arbeitsplatz zu verschieben, wobei wenigstens einer dieser Arbeitsplätze beweglich ist.

2. Robotersystem nach Anspruch 1, dadurch gekennzeichnet, daß der ortsfeste Arbeitsplatz eine Steuer- und Speichereinrichtung für die durch das Robotersystem auszuführenden Arbeiten umfaßt.

3. Robotersystem nach Anspruch 1, dadurch gekennzeichnet, daß jeder ortsfeste Arbeitsplatz über ein lokales Kommunikationsnetz verbunden ist mit einer einzigen Steuer- und Speichereinrichtung für die durch den Roboter auszuführenden Arbeiten, wobei jeder der besagten Plätze Sende/Empfangseinrichtungen(E/R) umfaßt, um Informationen mit dem Benutzer-/Robotersystem-Interface auszutauschen.

4. Robotersystem nach Anspruch 1, dadurch gekennzeichnet, daß es eine Steuer- und Speichereinrichtung für die auszuführenden Arbeiten umfaßt.

5. Robotersystem nach Anspruch 4, dadurch gekennzeichnet, daß es außerdem Sende-/Empfangseinrichtungen (E/R) umfaßt, um Informationen mit dem Benutzer-/Robotersystem-Interface auszutauschen.

6. Robotersystem nach einem der Ansprüche 1 bis 5, dadurch gekennzeichnet, daß es Trägereinrichtungen (4) umfaßt, jede an einem Arbeitplatz befestigt, sich einfügend zwischen die Handhabungseinrichtung und die Verschiebungseinrichtungen, wobei diese Trägereinrichtungen die Handhabungseinrichtung in einem definierten Arbeitsbereich zu einer anderen Trägereinrichtung verschieben können.

7. Robotersystem nach Anspruch 6, dadurch gekennzeichnet, daß die Verschiebungseinrichtungen einen Kopplungsträger (7) umfassen, der mechanische und elektrische Verbindungen zwischen der Handhabungseinrichtung und einer der Trägereinrichtungen gewährleistet.

8. Robotersystem nach Anspruch 7, dadurch gekennzeichnet, daß der Kopplungsträger Verriegelungseinrichtungen umfaßt, die zugleich eine Verriegelung und einen elektrischen Kontakt des besagten Kopplungsträgers auf der Trägereinrichtung gewährleisten.

9. Robotersystem nach Anspruch 7 oder 8, dadurch gekennzeichnet, daß der Kopplungsträger wenigstens einen Motor (9) und eine Übertragungseinrichtung (8a, 8b) umfaßt, um der Handhabungseinrichtung Bewegungen mitzuteilen, die die Durchführung der befohlenen Aufgaben ermöglichen.

10. Robotersystem nach einem der Ansprüche 1 bis 5, dadurch gekennzeichnet, daß es eine Handhabungseinrichtung umfaßt, die Gegenstände handhaben kann, und eine Trägereinrichtung, an der die Handhabungseinrichtung befestigt ist, geeignet in einem festgelegten Arbeitsbereich verschoben zu werden, wobei die Trägereinrichtung vom ersten Arbeitsplatz zum zweiten Arbeitsplatz verschoben werden kann.

11. Robotersystem nach Anspruch 10, dadurch gekennzeichnet, daß die Verschiebungseinrichtungen einen Kuppler (32) umfassen, der die mechanischen und elektrischen Verbindungen zwischen dem Robotersystem und einem der Arbeitsplätze gewährleistet.

12. Robotersystem nach Anspruch 10 oder 11, dadurch gekennzeichnet, daß jeder Arbeitsplatz einen fest angebrachten Steckverbinder (14 oder 25) umfaßt, der mit dem Kuppler verbunden werden kann.

13. Robotersystem nach Anspruch 12, dadurch gekennzeichnet, daß der Kuppler Verriegelungseinrichtungen (34) umfaßt, die zugleich die Verriegelung und einen elektrischen Kontakt des Kupplers zum Steckverbinder des Arbeitsplatzes gewährleisten.

14. Robotersystem nach Anspruch 12 oder 13, dadurch gekennzeichnet, daß der Kuppler außerdem Einrichtungen umfaßt, um den Steckverbinder eines Arbeitsplatzes zum Steckverbinder eines anderen Arbeitsplatzes zu führen.

15. Robotersystem nach einem der Ansprüche 12 bis 14, dadurch gekennzeichnet, daß die fest angebrachten Steckverbinder der Arbeitsplätze Einrichtungen zur gegenseitigen Ausrichtung umfassen.

16. Robotersystem nach einem der Ansprüche 14 und 15, dadurch gekennzeichnet, daß die Einrichtungen zum Führen der Steckverbinder ein zylindrisches Teil (33) umfassen, dessen Enden nach innen abgeschrägt sind.

17. Robotersystem nach einem der Ansprüche 13 bis 16, dadurch gekennzeichnet, daß die Verriegelungseinrichtungen einen Waage- bzw. Doppel-Riegel (verrou à balance) umfassen, der gleichzeitig die Entriegelung des Kupplers aus dem Steckverbinder eines Arbeitsplatzes und die Verriegelung des Kupplers mit dem Steckverbinder eines anderen Arbeitsplatzes bewirkt.
